# FASCICULE DE BREVET EUROPEEN

(11) **EP 3 638 532 B1**
(45) Date de publication et mention de la délivrance du brevet: **04.08.2021**
(21) Numéro de dépôt: 18737335.2
(22) Date de dépôt: 01.06.2018
(51) Int. Cl.: B60K 15/04

(54) **DISPOSITIF D'INHIBITION D'UN DÉTROMPEUR DE RÉSERVOIR**
VORRICHTUNG ZUM ÜBERSTEUERN EINER VORRICHTUNG ZUR VERHINDERUNG VON FEHLBETANKUNG
DEVICE FOR OVERRIDING A MISFUELLING PREVENTION DEVICE

(30) Priorité: 13.06.2017 FR 1755269
(43) Date de publication de la demande: 22.04.2020
(73) Titulaire: PSA Automobiles SA, 78300 Poissy (FR)
(72) Inventeur: MASSE, David, 78500 Sartrouville (FR); SOUKANH, Patrick, 77600 Bussy St Georges (FR)
(86) Numéro de dépôt international: PCT/FR2018/051269
(87) Numéro de publication internationale: WO 2018/229383

(56) Documents cités:
- EP-A1- 2 918 438
- FR-A1- 2 905 638
- JP-A- 2008 265 621
- US-A1- 2014 352 846

## Description

L'invention se rapporte au domaine de l'automobile et concerne plus particulièrement un dispositif et un procédé d'inhibition d'un détrompeur d'un réservoir de carburant d'un véhicule automobile. L'invention vise notamment à permettre le remplissage d'un réservoir de véhicule automobile avec du gazole délivré par un pistolet de distribution de faible diamètre.

Dans le domaine de l'automobile, une norme ISO (International Organization for Standardization) préconise que les pistolets de distribution de gazole aient un diamètre de 24 mm et que les pistolets de distribution d'essence aient un diamètre de 21 mm de sorte qu'il ne soit pas mécaniquement possible d'introduire un pistolet de distribution de gazole dans la tubulure d'entrée d'un réservoir d'essence.

Afin d'éviter à l'inverse de permettre de remplir un réservoir de gazole avec de l'essence, il est connu d'équiper l'orifice de remplissage du réservoir de carburant d'un véhicule automobile à moteur Diesel d'un dispositif appelé « détrompeur ». Un tel détrompeur ne s'ouvre que si le pistolet est suffisamment large pour écarter des organes libérant un clapet afin de permettre l'introduction du pistolet et le remplissage du réservoir avec du gazole.

Dans certains pays, la norme ISO des diamètres des pistolets n'est pas toujours respectée et il arrive que les pistolets distribuant du gazole présentent un diamètre trop faible pour activer le détrompeur, c'est-à-dire pour écarter les organes de libération du clapet. Dans un tel cas, il n'est alors pas possible de réaliser un apport en gazole dans le réservoir, ce qui présente un inconvénient important.

Afin de remédier à cet inconvénient, il est connu d'utiliser un accessoire permettant d'inhiber mécaniquement le détrompeur par blocage, sans dégradation pour ledit détrompeur et de manière totalement réversible. Cet accessoire, appelé « dispositif d'inhibition du détrompeur » ou « inhibiteur de détrompeur » se place dans la tubulure d'entrée du réservoir de gazole.

Une solution connue, décrite dans le document FR2963912, est utilisée pour un détrompeur dit « à griffes ». Un tel détrompeur comprend un système de verrouillage du clapet qui comporte deux griffes de part et d'autre d'un diaphragme. L'ouverture du diaphragme, par introduction d'un pistolet de remplissage de diamètre suffisamment important pour l'écarter radialement, provoque l'écartement des griffes du système de verrouillage et le déverrouillage du clapet. La solution décrite dans ce document consiste à introduire un manchon de faible longueur dans la tubulure d'entrée du réservoir afin de bloquer le clapet d'admission de carburant. Lors de son introduction, le manchon provoque l'ouverture du diaphragme qui, en appuyant sur les griffes, entraine le déverrouillage et l'ouverture du clapet. Une nervure formée sur la partie externe du manchon permet de bloquer ledit manchon contre l'extrémité libre du clapet en position déverrouillée de sorte que ce dernier empêche ainsi le retrait du manchon. Dans cette solution, le manchon est destiné à rester positionné dans la tubulure aussi longtemps qu'il est nécessaire d'utiliser des pistolets à gazole de faible diamètre. Cependant, l'utilisation d'un tel manchon présente plusieurs inconvénients. Tout d'abord, l'utilisation d'un manchon impose des contraintes de structure à la tubulure afin qu'elle puisse recevoir ledit manchon. Ensuite, la mise en place et l'extraction d'un tel manchon peuvent s'avérer complexes. De même, l'utilisation d'un manchon présente un risque de blocage des composants du détrompeur ou du pistolet dans la tubulure si le positionnement du manchon évolue au fur et à mesure des introductions du pistolet dans la tubulure et le manchon. Enfin, un tel manchon peut perturber le remplissage du réservoir car il constitue un élément supplémentaire dans la tubulure d'entrée du réservoir.

Afin de résoudre au moins en partie ces inconvénients, une autre solution connue, décrite dans le document FR2963911, consiste à introduire dans la tubulure une extrémité adaptée d'une tige afin d'écarter le diaphragme et déverrouiller le clapet pour que, lors du retrait de la tige, le clapet repose sur des griffes de verrouillage dans une position déverrouillée. L'introduction d'un pistolet de faible diamètre dans la tubulure permet alors ultérieurement de repousser le clapet qui n'est pas verrouillé pour introduire du carburant dans le réservoir. Lors du retrait du pistolet de faible diamètre, le clapet se replace en position déverrouillée en appui sur les griffes, l'écartement simultané des griffes ne pouvant être obtenu avec un pistolet de faible diamètre. Dans cette solution, le positionnement du clapet en appui sur les griffes est obtenu grâce à la structure est aux dimensions de la tige. La tige comprend un effet une portion centrale, dont le diamètre est adapté pour écarter le diaphragme et les griffes et déverrouiller le clapet, et une extrémité libre dont le diamètre est inférieur au diamètre de la portion centrale afin de maintenir le clapet ouvert hors de sa position de déverrouillage lors du retrait de la tige qui provoque le resserrement des griffes de sorte que le clapet se trouve en appui sur les griffes et non verrouillé par les griffes lorsque la tige a été retirée.

Les détrompeurs à griffes présentant certains inconvénients, notamment en terme de blocage de composants dans la tubulure, il est connu d'utiliser aujourd'hui des détrompeurs dits « à hélice». Un détrompeur à hélice comporte une pièce flexible réalisée en un matériau plastique en forme d'hélice et qui est solidaire, en une de ses extrémités, de l'entrée de tubulure, et dont l'autre extrémité, située à l'intérieur de la tubulure de remplissage, est libre en rotation et translation. Cette extrémité libre porte un volet mobile pivotant, maintenu fermé par un ressort de rappel. Le volet mobile comporte une languette qui, au repos en position « verrouillée » est face à une butée formée dans le corps de tubulure permettant ainsi de bloquer le volet. Le diamètre de l'hélice est tel que lorsqu'on enfonce un pistolet à gazole de diamètre important, cela a pour effet d'élargir le corps de l'hélice et de provoquer une rotation de l'extrémité mobile, au fur et à mesure de l'enfoncement du pistolet, de sorte que la languette du volet ne se trouve plus en face de la butée permettant ainsi au volet de s'ouvrir avec l'enfoncement du pistolet. A contrario, si on enfonce un pistolet de faible diamètre, l'hélice ne se déforme pas et la languette du volet reste bloquée dans la butée formée dans le corps de tubulure, empêchant le remplissage avec le carburant distribué par un tel pistolet.

La solution d'inhibiteur à tige décrite ci-avant pour un détrompeur à griffes ne s'avère pas adaptée pour un tel détrompeur à hélice. En effet, lors du retrait de la tige, il s'avère que la faible longueur de l'extrémité libre de la tige n'est pas suffisante pour permettre au volet de venir se placer en appui sur la butée sans verrouiller ledit volet.

Le document EP 2 918 438 A1 divulgue également un dispositif d'inhibition d'un détrompeur de réservoir de carburant, qui n'est pas non plus adapté pour un détrompeur à hélice.

L'invention vise donc à résoudre ces inconvénients en proposant une solution simple, fiable et efficace pour inhiber le détrompeur à hélice d'un réservoir de gazole.

A cette fin, l'invention a tout d'abord pour objet un dispositif d'inhibition d'un détrompeur de réservoir de carburant d'un véhicule automobile, ledit réservoir comprenant une tubulure de remplissage dans laquelle est monté ledit détrompeur, le détrompeur comprenant une pièce flexible en forme d'hélice qui est solidaire, en une de ses extrémités de l'entrée de tubulure, et dont l'autre extrémité, située à l'intérieur de la tubulure, est libre en rotation et translation entre une position repliée et une position dépliée de la pièce flexible, ladite extrémité libre comprenant un volet mobile pivotant, maintenu fermé par un ressort de rappel et comprenant une languette qui, au repos en position « verrouillée » du volet, est engagée dans une butée afin d'empêcher l'ouverture du volet.

Ledit dispositif est remarquable en ce qu'il comprend un tube creux, ouvert à ses deux extrémités et apte à être inséré dans la pièce flexible du détrompeur de manière à déplacer l'hélice en rotation, pour déplacer la languette hors de la butée, et en translation, pour ouvrir le volet mobile pivotant, et une tige apte à coulisser à l'intérieur dudit tube jusqu'à une position de support du volet dans laquelle la tige supporte le volet dans une position ouverte.

Le tube est configuré pour être retiré tout en maintenant la tige dans sa position de support du volet de sorte, d'une part, à permettre la rotation de la pièce flexible vers sa position repliée et, d'autre part, à maintenir le volet dans une position déverrouillée. La tige est configurée pour être retirée du détrompeur, après le retrait du tube de la pièce flexible, afin que la languette du volet vienne en appui sur la butée sans pour autant s'engager avec ladite butée de manière à inhiber le détrompeur.

Le dispositif selon l'invention est ainsi à la fois simple, efficace et aisé à utiliser pour inhiber un détrompeur à hélice. En particulier, la manipulation du dispositif est aisément réalisée en trois temps : l'insertion du tube et de la tige pour ouvrir le volet, le retrait du tube pour replier l'hélice en partie tout en maintenant la tige pour supporter le volet et le retrait de la tige afin que la languette du volet vienne en appui sur la butée de manière à laisser le volet ouvert pour permettre le remplissage du carburant par un pistolet de faible diamètre. On notera en outre que, partant de la solution décrite dans le document FR2963911, une solution évidente aurait été d'augmenter la longueur de l'extrémité libre de la tige. Toutefois, une telle augmentation de la longueur empêcherait la portion centrale de venir en appui sur l'hélice pour l'entrainer en rotation, ce qui ne permettrait pas d'ouvrir le volet. La présente invention permet donc de résoudre les problèmes posés par la solution décrite dans le document FR2963911 de manière efficace sans nécessiter un calcul et une adaptation de la longueur de la tige décrite dans l'art antérieur. Notamment, les pièces coulissantes utilisées dans la présente invention permettent avantageusement d'utiliser l'inhibiteur quel que soit le type de détrompeur et de tubulure de réservoir.

Dans une forme de réalisation, la butée est formée dans le détrompeur, par exemple dans la pièce flexible.

Dans une autre forme de réalisation, la butée est formée dans le corps de la tubulure de remplissage.

Selon un aspect de l'invention, la tige comprend une extrémité proximale apte à être manipulée par un opérateur et une extrémité distale apte à repousser le volet.

De préférence, l'extrémité distale de la tige présente une forme arrondie, de préférence hémisphérique, afin de repousser le volet de manière efficace et sans l'endommager.

Dans une forme de réalisation, le dispositif comprend en outre des moyens de blocage en translation de la tige par rapport au tube afin de manipuler aisément le dispositif.

Dans une autre forme de réalisation, le dispositif comprend des moyens de préhension permettant de déplacer la tige relativement au tube.

De manière avantageuse, les moyens de préhension comprennent une première poignée montée sur le tube et une deuxième poignée montée sur la tige afin de faire coulisser la tige aisément dans le tube.

Selon un aspect de l'invention, le tube est réalisé en un matériau plastique ou en métal.

Selon un autre aspect de l'invention, la tige est réalisée en un matériau plastique ou en métal.

L'invention concerne aussi l'utilisation d'un dispositif tel que présenté précédemment pour inhiber un détrompeur monté dans la tubulure de remplissage d'un réservoir de carburant d'un véhicule automobile.

L'invention concerne également un procédé d'inhibition d'un détrompeur de réservoir de carburant d'un véhicule automobile, ledit réservoir comprenant une tubulure de remplissage dans laquelle est monté un détrompeur, ledit détrompeur comprenant une pièce flexible en forme d'hélice qui est solidaire, en une de ses extrémités de l'entrée de tubulure, et dont l'autre extrémité, située à l'intérieur de la tubulure, est libre en rotation et translation entre une position repliée et une position dépliée de la pièce flexible, ladite extrémité libre comprenant un volet mobile pivotant, maintenu fermé par un ressort de rappel et comprenant une languette qui, au repos en position « verrouillée » du volet, est engagée dans une butée formée dans le corps de la tubulure de remplissage afin d'empêcher l'ouverture du volet.

Ledit procédé étant remarquable en ce qu'il comprend :
- une étape d'insertion, dans la pièce flexible du détrompeur, d'un tube creux ouvert à ses deux extrémités, de manière à déplacer l'hélice en rotation, pour déplacer la languette hors de la butée, et en translation, pour ouvrir le volet mobile pivotant, ladite insertion étant réalisée jusqu'à une position de support du volet dans une position ouverte, une tige étant montée dans ledit tube creux,
- une étape de retrait du tube tout en maintenant la tige dans la position de support du volet de sorte, d'une part, à permettre la rotation de la pièce flexible vers sa position repliée et, d'autre part, à maintenir le volet dans une position déverrouillée,
- une étape de retrait de la tige afin que la languette du volet vienne en appui sur la butée de la tubulure sans pour autant s'engager avec ladite butée de manière à inhiber le détrompeur.

D'autres caractéristiques et avantages de l'invention apparaîtront à la lecture de la description détaillée des modes de réalisation de l'invention, donnés à titre d'exemple uniquement, et en référence aux dessins qui illustrent :
- la figure 1, une vue en coupe d'un exemple de détrompeur à hélice monté dans une tubulure de réservoir,
- la figure 2, une vue en coupe d'une forme de réalisation du dispositif d'inhibition selon l'invention,
- la figure 3, un exemple de moyens de blocage,
- la figure 4 à 6, des exemples de moyens de préhension,
- la figure 7, un mode de réalisation du procédé selon l'invention,
- les figures 8 à 12, les étapes illustrées du procédé de la figure 7 utilisant le dispositif de la figure 2 et le détrompeur de la figure 1.

Dans ce qui va suivre, les modes de réalisation décrits s'attachent plus particulièrement à une mise en œuvre du dispositif d'inhibition d'un détrompeur selon l'invention dans un véhicule automobile. Cependant, toute mise en œuvre dans un contexte différent, en particulier dans tout type de véhicule, est également visée par la présente invention.

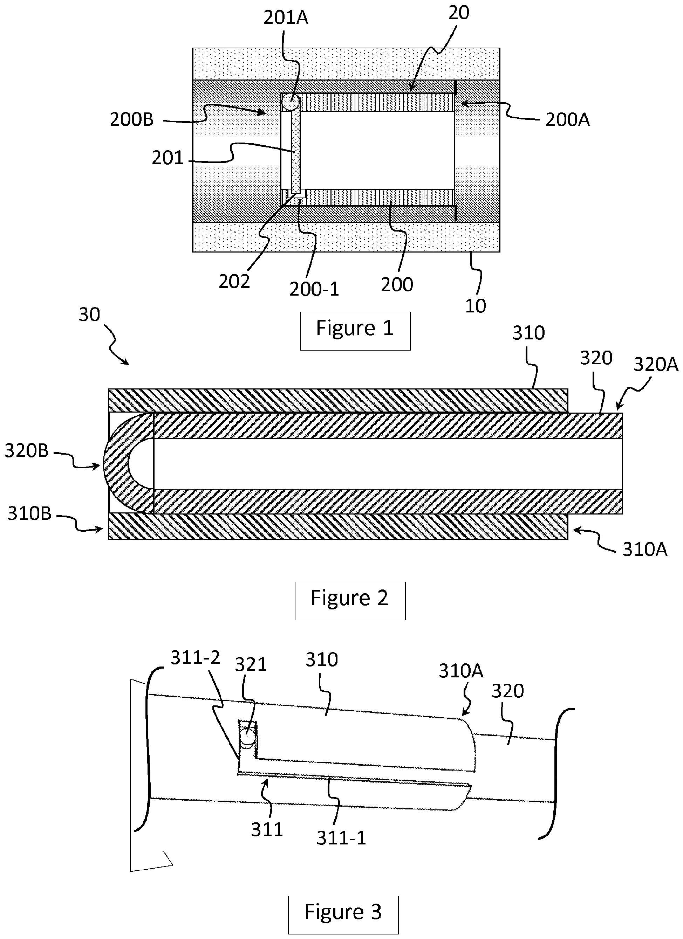

La figure 1 représente partiellement et schématiquement une tubulure 10 de remplissage d'un réservoir de gazole d'un véhicule automobile.

Afin d'éviter l'introduction dans la tubulure d'un pistolet à essence de faible diamètre pour remplir le réservoir, le réservoir comprend un détrompeur 20 monté dans la tubulure 10.

Le détrompeur 20 comprend une pièce 200 flexible en forme d'hélice qui est solidaire, en une 200A de ses extrémités de l'entrée de tubulure 10, et dont l'autre extrémité 200B, située à l'intérieur de la tubulure 10, est libre en rotation et translation entre une position repliée et une position dépliée de la pièce 200 flexible.

L'extrémité libre 200B comprend un volet 201 mobile pivotant, maintenu fermé par un ressort de rappel 201A et comprenant une languette 202 qui, au repos en position « verrouillée » du volet 201, est engagée dans une butée 200-1 afin d'empêcher l'ouverture du volet 201. Dans l'exemple illustré à la figure 1, la butée 200-1 est formée dans la pièce 200 flexible. En variante, la butée 200-1 pourrait être formée dans le corps de la tubulure 10 de remplissage.

Le détrompeur 20 est configuré pour ouvrir le volet 201 lorsqu'un pistolet de distribution de gazole de diamètre adapté est inséré dans ledit détrompeur 20 et pour conserver le volet 201 dans une position verrouillée lorsqu'un pistolet de distribution de carburant de diamètre insuffisant est inséré à travers ledit détrompeur 20.

Le dispositif 30 selon l'invention permet d'inhiber le détrompeur 20 afin qu'un opérateur puisse insérer un pistolet à gazole de faible diamètre et ouvrir le volet 201 du détrompeur 20 pour remplir le réservoir.

A cette fin, en référence à la figure 2, le dispositif 30 d'inhibition comprend un tube 310 creux et une tige 320. Le tube 310 est de préférence réalisé en un matériau plastique ou en métal. De même, la tige 320 est de préférence réalisée en un matériau plastique ou en métal.

Le tube 310 creux est ouvert à ses deux extrémités 310A, 310B et est apte à être inséré dans la pièce flexible 200 du détrompeur 20 de manière à déplacer l'hélice en rotation, pour déplacer la languette 202 hors de la butée 200-1, et en translation, pour ouvrir le volet 201 mobile pivotant. En d'autres termes, le tube 310 creux possède le diamètre externe adapté pour, lorsqu'il est inséré dans le détrompeur 20, venir en contact avec la pièce 200 flexible et l'entrainer en rotation puis en translation une fois la languette 202 hors de sa butée 200-1.

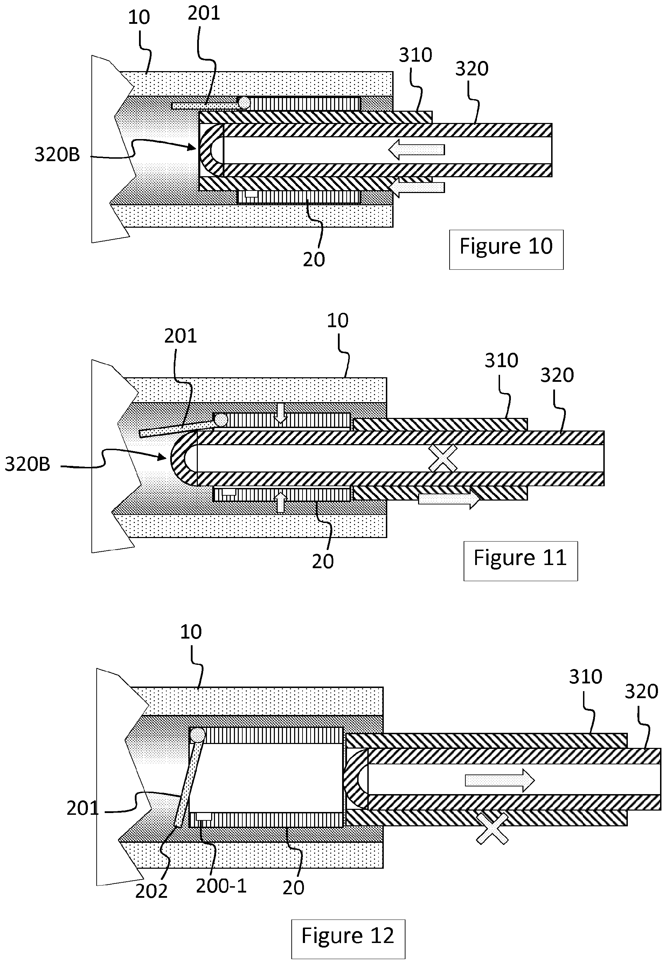

La tige 320 est apte à coulisser à l'intérieur du tube 310 jusqu'à une position de support du volet 201 dans laquelle la tige 320 supporte le volet 201 dans une position ouverte (illustrée à la figure 11). De préférence, la tige 320 est cylindrique de section circulaire et son diamètre externe est inférieur de moins de deux millimètres, de préférence de moins d'un millimètre au diamètre interne du tube de manière à permettre à la fois un coulissement de la tige 320 dans le tube 310 et un maintien dans la tige 320 dans le tube 310.

Comme illustré aux figures 10 et 11, le tube 310 est configuré pour être retiré du détrompeur 20 tout en maintenant la tige 320 dans sa position de support du volet 201 de sorte, d'une part, à permettre la rotation de la pièce flexible vers sa position repliée et, d'autre part, à maintenir le volet 201 dans une position ouverte. Autrement dit, le tube 310 et la tige 320 sont aptes à être manipulés par un opérateur afin de permettre simultanément le retrait du tube 310 et le maintien de la tige 320 dans sa position de support du volet 201.

La tige 320 est configurée pour être retirée afin que la languette 202 du volet 201 vienne en appui sur la butée 200-1 sans pour autant s'engager avec ladite butée 200-1 de manière à inhiber le détrompeur 20. En d'autres termes, la tige 320 est apte à être manipulée par un opérateur afin de permettre son retrait du détrompeur 20.

Plus précisément, en référence à la figure 2, la tige 320 comprend une extrémité proximale 320A apte à être manipulée par un opérateur et une extrémité distale 320B apte à repousser le volet 201. De préférence, dans la forme de réalisation illustrée sur les figures, l'extrémité distale 320B de la tige 320 présente une forme arrondie afin de limiter les frottements et faciliter l'ouverture du volet 201.

De la même façon, le tube 310 comprend une extrémité proximale 310A apte à être manipulée par un opérateur et une extrémité distale 310B apte être insérée dans le détrompeur 20 afin de le désactiver.

Dans l'exemple illustré, le tube 310 présente un diamètre externe constant et un diamètre interne constant. En variante, on notera que le diamètre externe et le diamètre interne du tube 310 pourraient varier le long du tube 310 ou plus généralement que toute autre forme adaptée du tube 310 pourrait être utilisée à la condition que le tube 310 remplisse sa fonction d'inhibition du détrompeur 20 à hélice au sens de la présente invention.

De même, dans l'exemple illustré, la tige 320 présente un diamètre externe constant mais on notera qu'en variante, le diamètre externe de la tige 320 pourrait varier le long du tube 310 ou plus généralement que toute autre forme adaptée de la tige 320 pourrait être utilisée à la condition que la tige 320 remplisse sa fonction d'inhibition du détrompeur 20 à hélice au sens de la présente invention. On notera également que la tige 320 peut être creuse ou pleine sans que cela ne limite la portée de la présente invention.

De préférence, le dispositif 30 peut comprendre en outre des moyens de blocage en translation de la tige 320 par rapport au tube 310.

Dans une forme de réalisation illustrée à la figure 3, ces moyens de blocage comprennent une lumière 311 en forme de L formée dans le tube 310 dont la branche 311-1 la plus longue du L s'étend depuis l'extrémité proximale 310A du tube 310. Cette lumière 311 permet de recevoir un pion 321 s'étendant depuis la face externe de la tige 320 qui peut ainsi coulisser dans la branche longue de la lumière 311 depuis l'extrémité proximale 310A du tube 310 jusqu'à une position de blocage en translation définie par la branche courte 311-2 de la lumière 311 qui s'étend perpendiculairement à la branche longue 311-1 de la lumière 311.

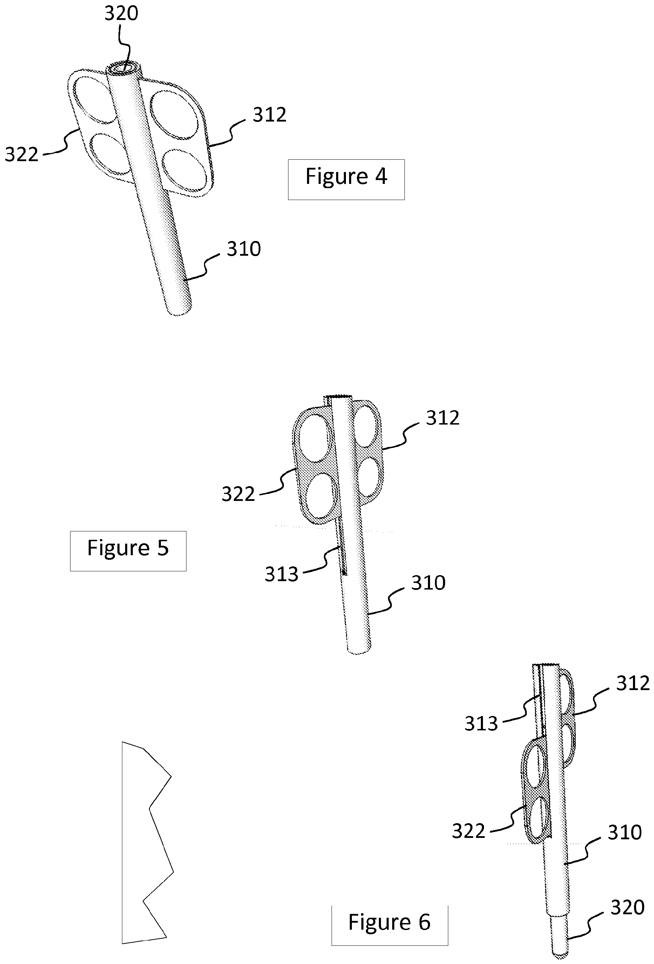

Dans une forme de réalisation illustrée aux figures 4 à 6, le dispositif 30 peut comprendre des moyens de préhension permettant de déplacer aisément la tige 320 relativement au tube 310. Dans l'exemple des figures 4 à 6, qui peut éventuellement être combinée avec la forme de réalisation de la figure 3, les moyens de préhension comprennent une première poignée 312 montée sur le tube 310 et une deuxième poignée 322 montée sur la tige 320 et traversant une lumière 313 formée dans le tube 310 afin de pouvoir être manipulée par un opérateur.

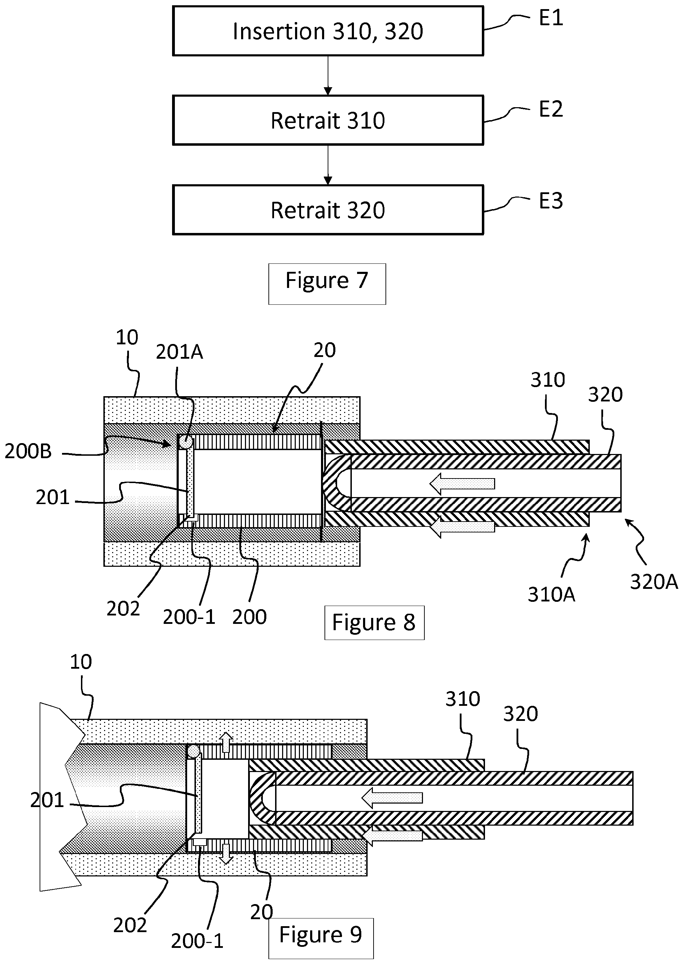

L'invention va maintenant être décrite dans sa mise en œuvre en référence aux figures 7 à 12.

Tout d'abord, dans une étape E1, on insère le tube 310 creux contenant la tige 320 dans la pièce 200 flexible du détrompeur 20 de manière à déplacer l'hélice d'une part en rotation pour déplacer la languette 202 hors de la butée 200-1 et d'autre part en translation pour ouvrir le volet 201 mobile pivotant (figures 8 à 10) jusqu'à une position dite « de support du volet 201 » dans laquelle le tube 310 et/ou la tige 320 supporte(nt) le volet 201 dans une position ouverte.

En variante, on pourrait insérer le tube 310 d'abord dans le détrompeur 20 puis faire glisser la tige 320 à l'intérieur du tube 310 afin qu'elle coulisse jusqu'à une position dite « de support du volet 201 » dans laquelle le tube 10 et/ou la tige 320 supporte(nt) le volet 201 dans une position ouverte.

Dans une étape E2, on retire le tube 310 de la pièce 200 flexible tout en maintenant la tige 320 dans la position de support du volet 201 de sorte, d'une part, à permettre la rotation de la pièce 200 flexible vers sa position repliée et, d'autre part, à maintenir le volet 201 dans une position déverrouillée (figure 11).

Enfin, dans une étape E3, on retire la tige 320 du détrompeur 20 afin que la languette 202 du volet 201 vienne en appui sur la butée 200-1 sans pour autant s'engager avec ladite butée 200-1 de manière à inhiber le détrompeur 20.

Le procédé selon l'invention permet ainsi avantageusement de désinhiber un détrompeur 20 à hélice de manière rapide, simple et efficace.

## Revendications

1. Dispositif (30) d'inhibition d'un détrompeur (20) de réservoir de carburant d'un véhicule automobile, ledit réservoir comprenant une tubulure (10) de remplissage dans laquelle est monté ledit détrompeur (20), le détrompeur (20) comprenant une pièce (200) flexible en forme d'hélice qui est solidaire, en une (200A) de ses extrémités de l'entrée de tubulure (10), et dont l'autre extrémité (200B), située à l'intérieur de la tubulure (10), est libre en rotation et translation entre une position repliée et une position dépliée de la pièce (200) flexible, ladite extrémité libre (200B) comprenant un volet (201) mobile pivotant, maintenu fermé par un ressort de rappel et comprenant une languette (202) qui, au repos en position « verrouillée » du volet (201), est engagée dans une butée (200-1) afin d'empêcher l'ouverture du volet (201), ledit dispositif (30) étant **caractérisé en ce qu'**il comprend :
- un tube (310) creux ouvert à ses deux extrémités (310A, 310B) apte à être inséré dans la pièce (200) flexible du détrompeur (20) de manière à déplacer l'hélice en rotation, pour déplacer la languette (202) hors de la butée (200-1), et en translation, pour ouvrir le volet (201) mobile pivotant,
- une tige (320) apte à coulisser à l'intérieur dudit tube (310) jusqu'à une position de support du volet (201) dans laquelle la tige (320) supporte le volet (201) dans une position ouverte,
le tube (310) étant configuré pour être retiré tout en maintenant la tige (320) dans sa position de support du volet (201) de sorte, d'une part, à permettre la rotation de la pièce (200) flexible vers sa position repliée et, d'autre part, à maintenir le volet (201) dans une position déverrouillée, la tige (320) étant configurée pour être retirée du détrompeur (20), après le retrait du tube (310) de la pièce (200) flexible, afin que la languette (202) du volet (201) vienne en appui sur la butée (200-1) sans pour autant s'engager avec ladite butée (200-1)de manière à inhiber le détrompeur (20).

2. Dispositif (30) selon la revendication précédente, dans lequel la tige (320) comprend une extrémité proximale (320A) apte à être manipulée par un opérateur et une extrémité distale (320B) apte à repousser le volet (201).

3. Dispositif (30) selon la revendication précédente, dans lequel l'extrémité distale (320B) de la tige (320) présente une forme arrondie.

4. Dispositif (30) selon l'une des revendications précédentes, comprenant en outre des moyens de blocage (311, 321) en translation de la tige (320) par rapport au tube (310).

5. Dispositif (30) selon l'une des revendications précédentes, comprenant en outre des moyens de préhension (312, 322) permettant de déplacer la tige (320) relativement au tube (310).

6. Dispositif (30) selon la revendication précédente, dans lequel les moyens de préhension comprennent une première poignée (312) montée sur le tube (310) et une deuxième poignée (322) montée sur la tige (320).

7. Dispositif selon l'une des revendications précédentes dans lequel le tube (310) est réalisé en un matériau plastique ou en métal.

8. Dispositif selon l'une des revendications précédentes, dans lequel la tige (320) est réalisée en un matériau plastique ou en métal.

9. Utilisation d'un dispositif (30) selon l'une des revendications précédentes pour inhiber un détrompeur (20) monté dans la tubulure (10) de remplissage d'un réservoir de carburant d'un véhicule automobile.

10. Procédé d'inhibition d'un détrompeur (20) de réservoir de carburant d'un véhicule automobile, ledit réservoir comprenant une tubulure (10) de remplissage dans laquelle est monté un détrompeur (20), ledit détrompeur (20) comprenant une pièce (200) flexible en forme d'hélice qui est solidaire, en une (200A) de ses extrémités de l'entrée de tubulure (10), et dont l'autre extrémité (200B), située à l'intérieur de la tubulure (10), est libre en rotation et translation entre une position repliée et une position dépliée de la pièce (200) flexible, ladite extrémité libre (200B) comprenant un volet (201) mobile pivotant, maintenu fermé par un ressort de rappel et comprenant une languette (202) qui, au repos en position « verrouillée » du volet (201), est engagée dans une butée (200-1) afin d'empêcher l'ouverture du volet (201), ledit procédé étant **caractérisé en ce qu'**il comprend:
- une étape (E1) d'insertion, dans la pièce flexible (200) du détrompeur (20), d'un tube (310) creux ouvert à ses deux extrémités (310A, 310B), de manière à déplacer l'hélice en rotation, pour déplacer la languette (202) hors de la butée (200-1), et en translation, pour ouvrir le volet (201) mobile pivotant, ladite insertion étant réalisée jusqu'à une position de support du volet (201) dans une position ouverte, une tige (320) étant montée dans ledit tube (310) creux,
- une étape (E2) de retrait du tube (310) tout en maintenant la tige (320) dans la position de support du volet (201) de sorte, d'une part, à permettre la rotation de la pièce (200) flexible vers sa position repliée et, d'autre part, à maintenir le volet (201) dans une position déverrouillée,
- une étape (E3) de retrait de la tige (320) afin que la languette (202) du volet (201) vienne en appui sur la butée (200-1) sans pour autant s'engager avec ladite butée (200-1) de manière à inhiber le détrompeur (20).

## Patentansprüche

1. Vorrichtung (30), die Hemmung des einen Polarisator (20), ein Kraftstofftank eines Kraftfahrzeugs, wobei der Behälter ein Rohr aufweist, (10) die Füllung, in der montiert ist, wobei die Polarisierer (20), das Stellglied (20), umfassend einen flexiblen Teil (200) in Form einer Wendel, die an einem (200A) ihrer Enden am Einlass des Schlauchs (10) befestigt ist und an der das andere Ende (200B), das sich innerhalb des Schlauchs (10) befindet, frei ist drehen und
übersetzen zwischen einer gefalteten Position und einer entfalteten Position des flexiblen Teils (200), wobei die freie Ende (200b) aufweist, einen Schwenk beweglichen Klappe (201), durch eine Rückstellfeder geschlossen gehalten und mit einer Zunge (202), die, in Ruhestellung in " Position verriegelt" der Klappe (201), wird in Eingriff ein Widerlager (200-1), um die Öffnung des verhindern Klappe (201), wobei die Vorrichtung (30) **dadurch gekennzeichnet ist, dass** sie umfasst:
- ein hohles Rohr (310) offen an seinen beiden Enden (310a, 310b) geeignet ist, eingeführt in den flexible Teil (200) der Modulationsvorrichtung (20) als um den Propeller in Drehung zu bewegen, um die Zunge zu bewegen (202) aus dem Anschlag (200-1) und in Übersetzung, um den beweglichen Schwenkverschluss (201) zu öffnen,
- eine Stange (320), die in der Lage ist, innerhalb des Rohrs (310) in eine Stützposition für den Verschluss (201) zu gleiten, in der die Stange (320) den Verschluss (201) in einer offenen Position stützt,
Das Rohr (310) ist so konfiguriert, dass es zurückgezogen werden kann, während die Stange (320) in ihrer Stützposition des Verschlusses (201) gehalten wird, um einerseits die Drehung des flexiblen Teils (200) in Richtung seiner gefalteten Position zu ermöglichen und andererseits, um den Verschluss (201) in einer entriegelten Position zu halten , wobei der Stab (320) konfiguriert ist,
um aus dem Polarisator (20) herausgezogen zu werden, nachdem das Rohr (310) aus dem Teil (200) herausgezogen worden ist) flexibel, so dass die Zunge (202) des Verschlusses (201) auf dem Stopper (200-1) aufliegt, ohne jedoch mit dem Stopper (200-1) in Eingriff zu treten, um den Polarisator (20) zu sperren.

2. Vorrichtung (30) nach dem vorhergehenden Anspruch, wobei der Stab (320) ein d ein proximales Ende (320A) aufweist, das zur Manipulation durch einen Bediener angepasst ist, und ein distales Ende (320B), das zum Drücken der Klappe (201) angepasst ist.

3. Vorrichtung (30) gemäß dem vorhergehenden Anspruch, bei der das distale Ende (320B) des Stabes (320) eine abgerundete Form aufweist.

4. Vorrichtung (30) nach einem der vorhergehenden Ansprüche, ferner umfassend Verriegelungsmittel (311, 321) in Translation der Stange (320) relativ zu dem Rohr (310).

5. Vorrichtung (30) nach einem der vorhergehenden Ansprüche, ferner umfassend Greifmittel (312, 322) zum Bewegen der Stange (320) relativ zu dem Rohr (310).

6. Vorrichtung (30) nach dem vorhergehenden Anspruch, bei der die Greifeinrichtung einen ersten Griff (312) umfasst, der an dem Rohr (310) angebracht ist, und einen zweiten Griff (322), der an der Stange (320) angebracht ist.

7. Vorrichtung nach einem der vorhergehenden Ansprüche wobei das Rohr (310) aus einem Kunststoffmaterial oder Metall hergestellt ist.

8. Vorrichtung nach einem der vorhergehenden Ansprüche, wobei der Stab (320) aus einem Kunststoffmaterial oder aus Metall besteht.

9. Verwendung einer Vorrichtung (30) nach einem der vorhergehenden Ansprüche zum Hemmen eines Polarisators (20) angebracht ist in dem Verteiler (10) für einen Kraftstofftank des Füllens eines Kraftfahrzeugs.

10. Verfahren zum Sperren einer Polarisationsvorrichtung (20) eines Kraftfahrzeugkraftstofftanks, wobei der Tank ein Füllrohr (10) umfasst, in dem eine Polarisationsvorrichtung (20) montiert ist, wobei die Polarisationsvorrichtung (20) einen flexiblen Teil (200) umfasst in Form einer Wendel, die an einem (200A) ihrer Enden am Einlass des Schlauchs (10) befestigt ist und an deren anderem Ende (200B), das sich innerhalb des Schlauchs (10) befindet, frei ist drehen und verschieben zwischen einer gefalteten Position und einer entfalteten Position des flexiblen Teils (200), wobei die freie Ende (200b) aufweist, einen Schwenk beweglichen Klappe (201), geschlossen gehalten durch eine Rückholfeder aufweist und eine Zunge (202), die zumin in der "Rest verriegelt" Position des Verschlusses (201), wird in Eingriff einen Anschlag (200-1) in um die Öffnung des zu
verhindern Verschlusses (201), wobei das Verfahren **dadurch gekennzeichnet ist, dass** sie umfasst:
- einen Schritt (E1) des Einführens eines an seinen beiden Enden (310A, 310B) offenen Hohlrohrs (310) in den flexiblen Teil (200) des Polarisators (20), um den Propeller in Rotation zu bewegen, um bewegen, um die Zunge (202) aus dem Anschlag (200-1), und in Translation, die zum öffnen schwenkbar beweglich Verschlusses (201), wobei die Insertion gemacht werden, um eine Stützposition des Verschlusses (201) in einer offene Position, einem Stab (320), der in dem Hohlrohr (310) montiert ist,
- einen Schritt (E2) zum Entfernen des Rohrs (310), während die Stange (320) in der Stützposition des Verschlusses (201) gehalten wird, um einerseits die Drehung des Teils (200) flexibel zu ermöglichen seine gefaltete Position und andererseits, um den Verschluss (201) in einer entriegelten Position zu halten,
- einen Schritt (E3) zum Entfernen der Stange (320), so dass die Zunge (202) der Klappe (201) auf dem Stopper (200-1) aufliegt, ohne dabei mit dem Stopper in Eingriff zu treten (200-1), um den Polarisator (20) zu sperren.

## Claims

1. Device (30) inhibition of a polarizer (20) A fuel tank of a motor vehicle, said tank comprising a pipe (10) of filling in which is mounted said polarizer (20), the actuator (20) comprising a flexible part (200) in the form of a helix which is secured, at one (200A) of its ends, to the inlet of the tubing (10), and of which the other end (200B), located inside the tubing (10), is free to rotate and
translate between a folded position and an unfolded position of the flexible part (200), said free end (200B) comprising a pivoting movable flap (201), held closed by a return spring and comprising a tongue (202) which, at rest in "position locked " of the flap (201), is engaged in an abutment (200-1) to prevent the opening of the flap (201), said device (30) being **characterized in that** it comprises :
- a hollow tube (310) open at its two ends (310A, 310B) capable of being inserted into the flexible part (200) of the keying device (20) so as to move the propeller in rotation, to move the tongue (202) out of the stop (200-1), and in translation, to open the movable pivoting shutter (201),
- a rod (320) able to slide inside said tube (310) to a position of support for the shutter (201) in which the rod (320) supports the shutter (201) in an open position,
the tube (310) being configured to be withdrawn while maintaining the rod (320) in its position of support of the shutter (201) so, on the one hand, to allow the rotation of the flexible part (200) towards its folded position and, on the other hand, to maintain the shutter (201) in an unlocked position , the rod (320) being configured to be withdrawn from the polarizer (20), after the tube (310) has been withdrawn from the part (200) flexible, so that the tongue (202) of the shutter (201) comes to bear on the stopper (200-1) without however engaging with said stopper (200-1) so as to inhibit the polarizer (20) .

2. Device (30) according to the preceding claim, wherein the rod (320) include an d a proximal end (320A) adapted to be manipulated by an operator and a distal end (320B) adapted to push the flap (201).

3. Device (30) according to the preceding claim, in which the distal end (320B) of the rod (320) has a rounded shape.

4. Device (30) according to one of the preceding claims, further comprising locking means (311, 321) in translation of the rod (320) relative to the tube (310).

5. Device (30) according to one of the preceding claims, further comprising gripping means (312, 322) for moving the rod (320) relative to the tube (310).

6. Device (30) according to the preceding claim, in which the gripping means comprise a first handle (312) mounted on the tube (310) and a second handle (322) mounted on the rod (320).

7. Device according to one of the preceding claims wherein the tube (310) is made of a plastic material or metal.

8. Device according to one of the preceding claims, in which the rod (320) is made of a plastic material or of metal.

9. Use of a device (30) according to one of the preceding claims for inhibiting a polarizer (20) mounted in the manifold (10) for filling a fuel tank of a motor vehicle.

10. A method of inhibiting a polarizing device (20) of a motor vehicle fuel tank, said tank comprising a filler pipe (10) in which a polarizing device (20) is mounted, said polarizing device (20) comprising a part (200) flexible in the form of a helix which is secured, at one (200A) of its ends to the inlet of the tubing (10), and the other end of which (200B), located inside the tubing (10)), is free to rotate and translate between a folded position and an unfolded position of the flexible part (200), said free end (200B) comprising a pivoting movable flap (201), held closed by a return spring and comprising a tongue (202) which, at rest in the " locked " position of the shutter (201), is engaged in a stop (200-1) in order to prevent the opening of the shutter (201), said method being **characterized in that** it includes :
- a step (E1) of inserting, in the flexible part (200) of the
polarizer (20), a hollow tube (310) open at its two ends (310A, 310B), so as to move the propeller in rotation, to move the tongue (202) out of the stop (200-1), and in translation, to open the pivoting movable shutter (201), said insertion being carried out to a support position of the shutter (201) in an open position, a rod (320) being mounted in said hollow tube (310),
- a step (E2) of removing the tube (310) while maintaining the
rod (320) in the support position of the shutter (201) so, on the one hand, to allow the rotation of the part (200) flexible to its folded position and, on the other hand, to maintain the shutter (201) in an unlocked position,
- a step (E3) of removing the rod (320) so that the tongue (202) of the
flap (201) comes to bear on the stopper (200-1) without thereby engaging with said stopper (200-1) so as to inhibit the polarizer (20).
